# EUROPEAN PATENT SPECIFICATION

(11) **EP 3 644 478 B1**
(45) Date of publication and mention of the grant of the patent: **24.04.2024**
(21) Application number: 19203625.9
(22) Date of filing: 16.10.2019
(51) Int. Cl.: H02K 5/08, H02K 11/40, H02K 37/14

(54) **MOTOR OPERATED VALVE**
MOTORBETRIEBENES VENTIL
VANNE MOTORISÉE

(30) Priority: 24.10.2018 JP 2018199619
(43) Date of publication of application: 29.04.2020
(73) Proprietor: TGK CO., Ltd., Tokyo 193-0942 (JP)
(72) Inventor: SHIMIZU, Ryosuke, Tokyo, 193-0942 (JP); SANNOMIYA, Takashi, Tokyo, 193-0942 (JP)
(74) Representative: Schröer, Gernot H.

(56) References cited:
- WO-A1-2017/195584
- CN-A- 107 620 824
- JP-A- H0 787 696
- JP-A- 2010 148 191
- KR-A- 20180 047 042

## Description

The present invention relates to a motor operated valve, in particular, to a motor operated valve including a circuit board as defined in independent claim 1.

An automotive air conditioner typically includes a compressor, a condenser, an expander, an evaporator, and so forth arranged in a refrigeration cycle. In refrigeration cycles, various control valves for controlling the flow of fluid, such as expansion valves serving as expanders, are used. With recent increase in electric vehicles, motor operated valves including motors as driving units have been increasingly widely employed.

A motor operated valve includes a body containing a valve section, and a motor unit, which are assembled together. Some motor units are provided with circuit boards inside the cases thereof, on which various circuits for controlling driving of the motors are mounted. As an example of such a motor operated valve, a motor operated vale in which a circuit board, a stator housing, and a body are connected by a conductive part for earthing is proposed, so as to reduce electromagnetic interference with electronic devices therearound (CN 107620824 A, for example).

### Related Art List

### (1) CN 107620824 A

The motor operated valve of CN 107620824, however, needs to be produced through complicated processes including welding or swaging between the conductive part and the stator housing, and then resin molding thereof. Such a disadvantage can be present in motor operated valves including circuit boards that are used for various applications not limited to refrigeration cycles.

JP 2010 148191 discloses a molded stator with a hole being produced in an injection molding process by an element comprised by an injection molding die used in the injection molding process.

One of objects of the present invention is to easily achieve a structure for reducing electromagnetic interference of a motor operated valve.

According to the invention, a motor operated valve includes: an assembly of a body including a valve section therein, and a motor unit including a stator coated with molding resin. The motor unit includes: a case integrated with the stator by the molding resin; and a circuit board provided in the case. The case has an insertion hole, the insertion hole being an insertion trace of a mold component in the molding resin. A conductive member is inserted in the insertion hole and electrically connected with a ground line of the circuit board.

According to an embodiment, the insertion trace that is inevitably formed by insertion of a mold component during molding is used as an insertion hole of the conductive member. Thus, this simple structure in which the conductive member is inserted afterward in the insertion hole (insertion trace) formed through molding enables a ground region connected with the ground line of the circuit board to be larger, and reduces the electromagnetic interference of the motor operated valve.

An advantageous embodiment of the present invention is a motor operated valve that includes: an assembly of a body made of metal including a valve section therein, and a motor unit including a stator coated with molding resin. The motor unit includes: a case integrated with the stator by the molding resin; and a circuit board provided in the case. A conductive member extends through the case, and has one end connected with a ground line of the circuit board and the other end connected with the body.

According to the embodiment, the simple structure in which the conductive member extends through the case made of the molding resin and directly connects the circuit board with the body enables a ground region connected with the ground line of the circuit board to be larger, and reduces the electromagnetic interference of the motor operated valve.
FIG. 1 is a cross-sectional view illustrating a motor operated valve according to a first embodiment;
FIGS. 2A and 2B illustrate structures of a stator and around the stator;
FIGS. 3A and 3B illustrate structures of a circuit board and around the circuit board;
FIG. 4 is a cross-sectional view illustrating a motor operated valve according to a second embodiment;
FIG. 5 is a cross-sectional view illustrating a motor operated valve according to a third embodiment; and
FIGS. 6A and 6B illustrate a conductive member according to a modification.

Certain embodiments of the invention will now be described. The description is not intended to limit the scope of the present invention, but to exemplify the invention.

Embodiments of the present invention will now be described in detail with reference to the drawings. In the description below, for convenience of description, the positional relationship in each structure may be expressed with reference to how the structure is depicted in the drawings. In the following embodiments and modifications thereof, components that are substantially the same will be designated by the same reference numerals and redundant description thereof may be omitted as appropriate.

### [First Embodiment]

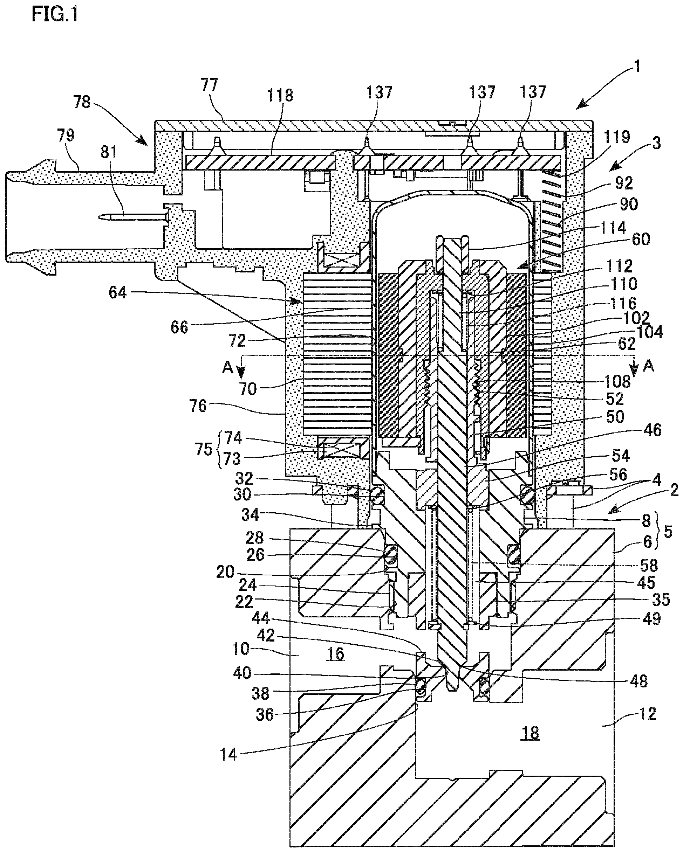

FIG. 1 is a cross-sectional view of a motor operated valve according to a first embodiment.

The motor operated valve 1 is applied to a refrigeration cycle of an automotive air conditioner, which is not illustrated. The refrigeration cycle includes a compressor for compressing a circulating refrigerant, a condenser for condensing the compressed refrigerant, an expansion valve for throttling and expanding the condensed refrigerant and delivering the resulting spray of refrigerant, and an evaporator for evaporating the spray of refrigerant to cool the air in a vehicle interior using the evaporative latent heat. The motor operated valve 1 functions as the expansion valve in the refrigeration cycle.

The motor operated valve 1 is constituted by an assembly of a valve unit 2 and a motor unit 3. The valve unit 2 includes a body 5 containing a valve section. The motor unit 3 is fixed to the body 5 with a connecting member 4 therebetween and closes an upper end opening of the body 5.

The body 5 is constituted by a first body 6 and a second body 8, which are assembled together in the axial direction. Lower part of the second body 8 is mounted on upper part of the first body 6. The first body 6 is made of an aluminum alloy, and the second body 8 is made of a copper alloy. In a modification, the second body 8 may be made of stainless steel (hereinafter referred to as "SUS").

The first body 6 has a prism shape, and has an inlet port 10 in upper part of one lateral face thereof and an outlet port 12 in lower part of the opposite lateral face. The valve section is located on a passage connecting the inlet port 10 with the outlet port 12. Refrigerant from an upstream side (condenser side) is introduced into the body 5 via the inlet port 10 and delivered to the valve section. The refrigerant throttled and expanded by the valve section is delivered toward the downstream side (evaporator side) via the outlet port 12.

A vertical connecting passage 14 is formed in the middle of the first body 6, a passage 16 upstream thereof communicates with the inlet port 10, and a passage 18 downstream thereof communicates with the outlet port 12. The first body 6 has a mounting hole 20 having a stepped circular hole shape. The diameter of the mounting hole 20 increases upward in a stepwise manner. The connecting passage 14 constitutes part of the mounting hole 20. An internal thread 22 is formed in the mounting hole 20 at a position substantially above the upstream side passage 16.

The second body 8 has a stepped cylindrical shape whose outer diameter and inner diameter decrease downward in a stepwise manner. The lower part of the second body 8 is mounted on the first body 6 in such a manner that the lower part is inserted in the mounting hole 20. Upper part of the second body 8 is out of the mounting hole 20 above the mounting hole 20. An external thread 24 to be screwed into the internal thread 22 of the first body 6 is formed on an outer face of a lower portion of the second body 8. An annular seal accommodating portion 26 is formed in an outer face of the second body 8 at a position slightly above the external thread 24, and a seal ring 28 is fitted therein. An annular seal accommodating portion 30 is also formed in the outer face of the upper part of the second body 8, and a seal ring 32 is fitted therein. A flange portion 34 protruding radially outward is formed on the second body 8 between the seal accommodating portions 26 and 30.

A valve seat forming member 35 is attached coaxially to the lower part of the second body 8. The valve seat forming member 35 has a bottomed cylindrical shape, and upper part thereof is coaxially press-fitted in the lower part of the second body 8. An annular seal accommodating portion 36 is formed in the outer face of lower part of the valve seat forming member 35, and a seal ring 38 is fitted therein. The valve seat forming member 35 is mounted on the first body 6 at the position of the seal ring 38.

A valve hole 40 is formed to pass through the bottom portion of the valve seat forming member 35 in the axial direction, and a valve seat 42 is formed at an open end of the valve hole 40. A communication hole 44 connecting the inside with the outside of the valve seat forming member 35 is formed in a lateral side of the valve seat forming member 35 slightly above the seal accommodating portion 36. A valve chamber 45 is formed inside the second body 8 and the valve seat forming member 35. The valve chamber 45 communicates with the upstream side passage 16 via the communication hole 44.

The second body 8 is mounted to be fitted in the mounting hole 20 from above the first body 6. In this process, the second body 8 is attached to the first body 6 in such a manner that the external thread 24 is screwed into the internal thread 22. In addition, a lower end portion of the valve seat forming member 35 is fitted in the mounting hole 20 (connecting passage 14). The second body 8 is fastened to the first body 6 in such a manner that the flange portion 34 is stopped by the top face of the first body 6. The seal ring 28 is provided between the first body 6 and the second body 8 fitted to each other, and the seal ring 38 is provided between the first body 6 and the valve seat forming member 35. The former prevents leakage of the refrigerant to the outside. The latter prevents leakage of the refrigerant through a clearance between the first body 6 and the valve seat forming member 35 (leakage of the refrigerant bypassing the valve section).

An actuating rod 46 extending from a rotor 60 of the motor unit 3 is inserted in the second body 8. The actuating rod 46 passes through the valve chamber 45. The actuating rod 46 is produced by cutting a rod material made of non-magnetic metal. A needle-like valve element 48 is formed integrally with a lower portion of the actuating rod 46. The valve element 48 touches and leaves the valve seat 42 from the side of the valve chamber 45 to close and open the valve section.

A guiding member 50 is provided vertically at the center of upper part of the second body 8. The guiding member 50 is produced by cutting a tubular material made of non-magnetic metal into a stepped cylindrical shape. An external thread 52 is formed on the outer surface of a middle portion in the axial direction of the guiding member 50. A lower end portion of the guiding member 50 is enlarged in diameter, and this diameter-enlarged portion 54 is fixed coaxially to the center of the upper part of the second body 8. The guiding member 50 slidably supports the actuating rod 46 in the axial direction by the inner face thereof, and rotatably and slidably supports a rotating shaft 62 of the rotor 60 by the outer face thereof.

A spring support 49 is provided on the actuating rod 46 at a position slightly above the valve element 48. A spring support 56 is also provided on a bottom portion of the guiding member 50. A spring 58 (which functions as a "biasing member") that biases the valve element 48 in the valve closing direction is provided between the spring supports 49 and 56.

The motor unit 3 is a three-phase stepping motor including the rotor 60 and a stator 64. The motor unit 3 includes a can 66 having a bottomed cylindrical shape. The rotor 60 is located inside the can 66, and the stator 64 is located outside the can 66. The can 66 is a bottomed-cylindrical member covering a space in which the valve element 48 and a mechanism for driving the valve element 48 are disposed and containing the rotor 60, and defines an internal pressure acting space (internal space) in which the pressure of the refrigerant acts and an external non pressure acting space (external space) in which the pressure of the refrigerant does not act. The can 66 is made of non-magnetic metal, and coaxially fixed to the second body 8 in such a manner that a lower end opening of the can 66 is mounted (outserted) around and welded to an upper end opening of the second body 8. A space surrounded by the can 66 and the second body 8 corresponds to the aforementioned pressure acting space.

The stator 64 includes a laminated core 70, and a plurality of salient poles 72 arranged at regular intervals on the inner side of the laminated core 70. The laminated core 70 is constituted by disc-shaped cores stacked in the axial direction. A bobbin 74 around which a coil 73 (electromagnetic coil) is wound is mounted on a salient pole 72. The coil 73 and the bobbin 74 constitute a "coil unit 75". In the present embodiment, three coil units 75 to supply three-phase currents are arranged at every 120 degrees with respect to the central axis of the laminated core 70.

The stator 64 is integrated with a case 76 of the motor unit 3. Specifically, the case 76 is formed by injection molding of a corrosion-resistant resin (plastic). The stator 64 is coated with molding resin by the injection molding (also called "insert molding" or "molding"). Hereinafter, the molded stator 64 and case 76 will also be referred to as a "stator unit 78".

The stator unit 78 has a hollow structure in which the can 66 is coaxially inserted, and is mounted on the body 5. The connecting member 4 is a plate member having an L shape in cross section, including a first flat part welded to a lower face of the case 76 and a second flat portion fixed to the first body 6. This fixing is made by fastening a bolt, which is not illustrated. The seal ring 32 is provided at a position where the second body 8 is fitted in the inner face of a lower portion of the case 76. This prevents an external atmosphere (such as water) from entering the inside of the motor operated valve 1.

The rotor 60 includes a cylindrical rotor core 102 mounted on the rotating shaft 62, and a magnet 104 provided along the outer circumference of the rotor core 102. The rotor core 102 is mounted on the rotating shaft 62. The magnet 104 is magnetized with a plurality of poles in the circumferential direction.

The rotating shaft 62 is a bottomed cylindrical shaft mounted (outserted) around the guiding member 50 and having an open end facing downward. An internal thread 108 formed on the inner surface of a lower portion of the rotating shaft 62 engages with the external thread 52 of the guiding member 50. With this structure, a screw feed mechanism functions by the rotation of the rotor 60, and the rotor 60 moves upward and downward in the axial direction.

An upper portion of the actuating rod 46 is reduced in diameter, and this reduced-diameter portion 110 extends through the bottom 112 of the rotating shaft 62. An annular stopper 114 is fixed to the leading end of the reduced-diameter portion 110. A spring 116 for biasing the actuating rod 46 downward (that is, in the valve closing direction) is provided between the base end of the reduced-diameter portion 110 and the bottom 112. In this structure, while the valve is being opened, the actuating rod 46 is moved integrally with the rotor 60, with the stopper 114 being stopped by the bottom 112. In contrast, while the valve is being closed, the spring 116 is compressed by reaction force that the valve element 48 receives from the valve seat 42. In this process, the reaction force caused by the elastic deformation of the spring 116 presses the valve element 48 against the valve seat 42, which increases the seating performance (valve closing performance) of the valve element 48.

The motor unit 3 includes a circuit board 118 on the outer side of the can 66. The circuit board 118 is fixed inside the case 76. In the present embodiment, various circuits that function as a control unit, a communication unit, and the like are mounted on the lower face of the circuit board 118. Specifically, a drive circuit for driving the motor, a control circuit (microcomputer) for outputting control signals to the drive circuit, a communication circuit for the control circuit to communicate with an external device, a power supply circuit for supplying power to the circuits and the motor (coil), etc. The upper end of the case 76 is closed by a cap member 77. The circuit board 118 is located in a space in the case 76, below the cap member 77.

A pair of terminals 137 connected with the coil 73 extends from the bobbin 74 and is connected with the circuit board 118. A power supply terminal, a ground terminal, and a communication terminal (which are also collectively referred to as "connection terminals 81") extend from the circuit board 118, and are drawn through a side wall of the case 76 to the outside. A connector part 79 is formed integrally with the side of the case 76, and the connection terminals 81 are located inside the connector part 79.

Insertion holes 90 extending in parallel with the axis are provided at specified positions of upper part of the case 76. The insertion holes 90 are traces (insertion traces) of insertion of mold components in the molding resin. Specifically, in the present embodiment, in molding the stator unit 78, the stator 64 is supported by a plurality of (three in the present embodiment) pins placed upright in a mold, which is not illustrated. These pins correspond to mold components that serve as support pillars. The pins have a columnar shape, and support an end face of the laminated core 70 in the axial direction. The insertion holes 90 having a circular cross section thus correspond to the insertion traces of the pins in the molded case 76. The upper end face of the laminated core 70 is partially exposed in the insertion holes 90.

In the present embodiment, an insertion hole 90 is used to electrically connect a ground line 119 of the circuit board 118 with the laminated core 70. Specifically, the face of the circuit board 118 on which the ground line 119 is formed and the upper end face of the laminated core 70 face each other in the axial direction of the laminated core 70. A coiled spring 92 is inserted in an insertion hole 90, and has one end in contact with the ground line 119 and the other end in contact with the laminated core 70. The surface of the laminated core 70 is insulated (coated), but the insulation is removed from an area thereof in contact with the coiled spring 92 by polishing. The coiled spring 92 is made of stainless steel (spring steel) having electrical conductivity, and functions as a "conductive member" and "elastic member". An appropriate elastic force of the coiled spring 92 maintains stable contacts at the respective ends of the coiled spring 92, and ensures the conduction between the ground line 119 and the laminated core 70.

Next, an arrangement of the conductive member will be described in detail.

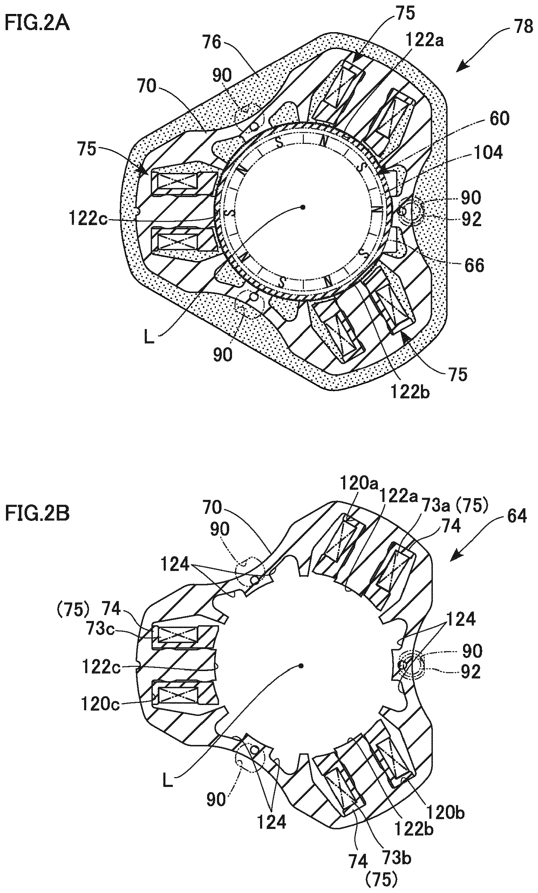

FIGS. 2A and 2B illustrate the structures of the stator 64 and around the stator 64. FIG. 2A cross-sectional view of the stator unit 78 corresponding to a cross section taken along arrows A-A in FIG. 1. FIG. 2B only illustrates the stator 64 (in a state before resin molding). Note that the can 66, the rotor 60, the insertion holes 90, and the coiled spring 92 are illustrated in FIG. 2A for reference (see two-dot chain line).

Because the motor unit 3 is a three-phase motor, the coil units 75 are provided at regular intervals around the axis of the rotor 60 as illustrated in FIG. 2A. As also illustrated in FIG. 2B, slots 120a to 120c (collectively referred to as "slots 120" when the slots need not be distinguished from each other) are formed at intervals of 120 degrees with respect to the axis L in the inner side of the laminated core 70. Salient poles 122a to 122c (collectively referred to as "salient poles 122") protruding radially inward from the centers of the respective slots 120 are formed, and a U-phase coil 73a, a V-phase coil 73b, and a W-phase coil 73c (collectively referred to as "coils 73") are mounted on the salient poles 122a to 122c, respectively. Slits 124 each having a U-shaped cross section are formed between adjacent slots 120 to optimize magnetic paths.

The magnet 104 faces the salient poles 122a to 122c with the can 66 therebetween. While the magnet 104 is magnetized with ten poles as illustrated in FIG. 2A in the present embodiment, the number of poles may be set as appropriate.

As described above, three pins (mold components) are used to support the stator 64 in molding the stator unit 78. Because the pins are arranged at intervals of 120 degrees with respect to the axis L of the stator 64, three insertion holes 90 are formed correspondingly. The coiled spring 92 (conductive member) is inserted in one of the three insertion holes 90, and in contact with part of the upper face of the laminated core 70. While the position of the contact is set between a pair of slits 124, as illustrated, in the present embodiment, the contact may be set at another position on the upper face of the laminated core 70.

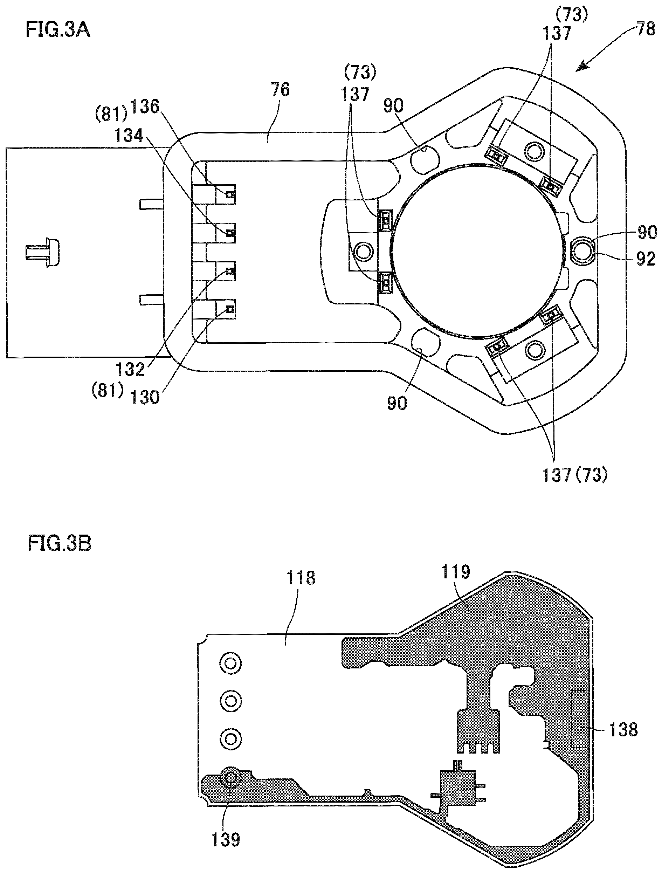

FIGS. 3A and 3B illustrate the structures of the circuit board 118 and around the circuit board 118. FIG. 3A is a plan view illustrating a state of the stator unit 78 before the cap member 77 and the circuit board 118 are mounted. FIG. 3B is a bottom view of the circuit board 118. In FIG. 3B, for convenience of explanation, only the ground line 119 is indicated by hatching, and the other components such as printed wiring and circuits are omitted.

As illustrated in FIG. 3A, two communication terminals (an input terminal 134 and an output terminal 132), a power supply terminal 130, and a ground terminal 136 are molded in the case 76. A pair of terminals 137 extends from each coil 73 and is connected with the circuit board 118. The coiled spring 92 is inserted in one of the three insertion holes 90 formed in the case 76.

As illustrated in FIG. 3B, the ground line 119 is formed on the bottom face of the circuit board 118 (an area in which the ground line 119 is formed will also be referred to as a "ground line forming area"). The ground line 119 includes a connection region 139 to which the ground terminal 136 is soldered, and a connection region 138 with which the upper face of the coiled spring 92 comes in contact.

With reference back to FIG. 1, the motor operated valve 1 having the structure as described above functions as a motor operated expansion valve whose opening degree can be adjusted by drive control of the motor unit 3. Specifically, the control circuit sets a control quantity (the number of driving steps of the motor) for achieving a target opening degree on the basis of a command from an external device, which is not illustrated, and outputs a drive signal (drive pulses) for achieving the control quantity to the drive circuit. The drive circuit supplies three-phase drive currents (drive pulses) to the coils 73 at set timings. This causes the rotor 60 to rotate with high resolution. In this process, when the valve element 48 is separated from the valve seat 42, that is, in the valve open state, the biasing force of the spring 116 brings the stopper 114 into contact with the rotating shaft, and the actuating rod 46 and thus the valve element 48 move integrally with the rotor 60.

The rotor 60 moves upward and downward by the screw feed mechanism between the rotor 60 and the guiding member 50. Specifically, the valve element 48 makes a translational movement in the opening and closing directions of the valve section, to adjust the opening degree of the valve section to the set opening degree. The screw feed mechanism converts the rotational movement of the rotor 60 about the axis into the translational movement (linear movement) of the actuating rod 46 in the axial direction, to drive the valve element 48 in the opening and closing directions of the valve section.

As described above, according to the present embodiment, a trace (insertion trace) of insertion of a pin (mold component) used as a support pillar in molding of the stator unit 78 is used as an insertion hole 90 of the coiled spring 92 (conductive member). Because a portion of the laminated core 70 contacted by the pin is not coated with resin, this portion is connected with the conductive member and used as a conduction path.

Thus, the coiled spring 92 is inserted afterward in the insertion hole 90 formed in molding, which achieves electrical conduction between the ground line 119 of the circuit board 118 and the laminated core 70 and reduces the electromagnetic interference of the motor operated valve 1. Furthermore, because the conductive member is an elastic member, the conductive member is elastically in contact with the circuit board and the core. As a result, the conductive member will not fall, and the conduction state is stably maintained. In other words, according to the present embodiment, because no joining means such as welding or swaging needs to be used for placing the conductive member, a structure for reducing the electromagnetic interference is achieved in a simple manner.

### [Second Embodiment]

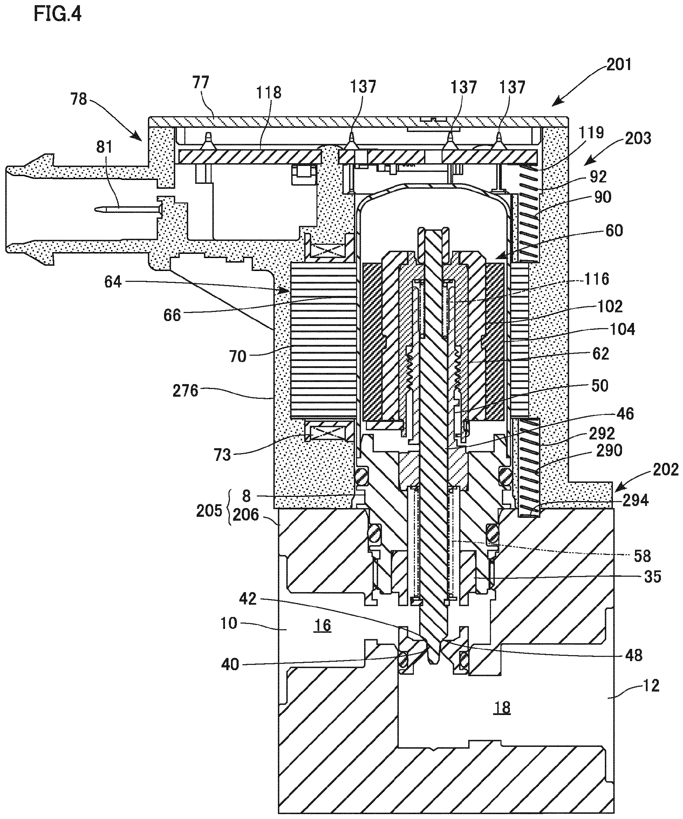

FIG. 4 is a cross-sectional view illustrating a motor operated valve according to a second embodiment.

The motor operated valve 201 is constituted by an assembly of a valve unit 202 and a motor unit 203. The upper end face of the valve unit 202 and the lower end face of the motor unit 203 are in contact with each other, and fastened and fixed to each other by bolts, which are not illustrated.

At least one insertion hole 290 extending in parallel with the axis is provided at a specified position of lower part of the case 276. In a manner similar to the insertion holes 90 in the upper part, the insertion hole 290 corresponds to a trace (insertion trace) of insertion of a second mold component (pin) in the molding resin. The insertion hole 290 (which functions as a "second insertion hole") having a circular cross section is thus formed as the insertion trace of the pin in the molded case 276. The lower end face of the laminated core 70 is partially exposed in the insertion hole 290. In addition, a recess 294 is formed in the upper face of the first body 206 at a position facing the insertion hole 290. The recess 294 is a circular groove having the same cross-sectional shape as the insertion hole 290, and coaxially faces the insertion hole 290. A coiled spring 292 is arranged in a space defined by the insertion hole 290 and the recess 294.

As a result, one end of the coiled spring 292 is in contact with the laminated core 70, and the other end thereof is in contact with the first body 206. The coiled spring 292 is made of stainless steel (spring steel) having electrical conductivity, and functions as a "second conductive member" and "elastic member". An appropriate elastic force of the coiled spring 292 maintains stable contacts at the respective ends of the coiled spring 292, and ensures the conduction between the laminated core 70 and the first body 206.

In this structure, the ground line 119 of the circuit board 118 and the body 205 are electrically connected with each other in series (linearly) via the coiled spring 92, the laminated core 70, and the coiled spring 292. As a result, a ground region connected with the ground line 119 of the circuit board 118 can be made larger than that in the first embodiment, and the electromagnetic interference of the motor operated valve 201 is more effectively reduced. In the present embodiment, the coiled springs 92 and 292 are identical to each other. Use of identical components in this manner reduces the component cost.

### [Third Embodiment]

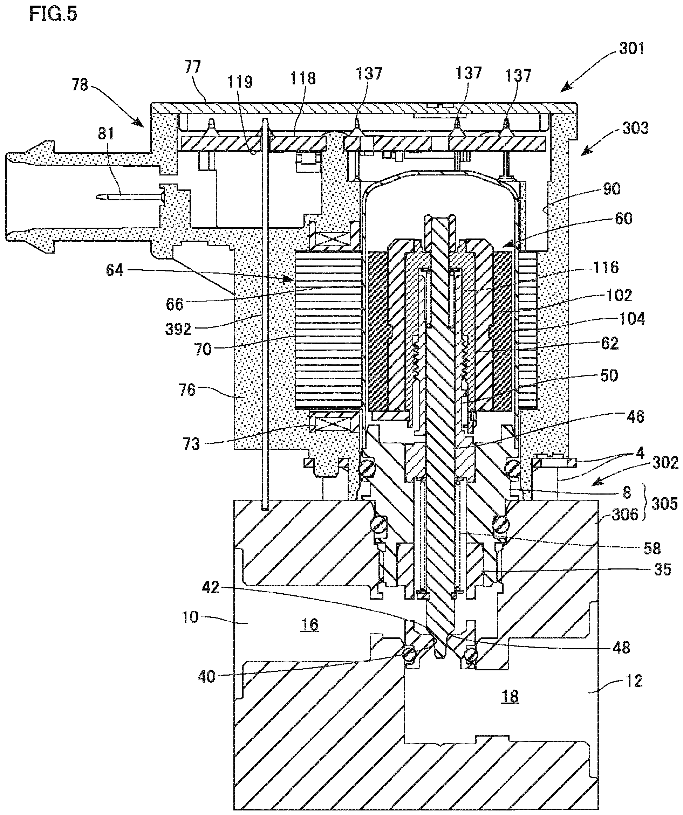

FIG. 5 is a cross-sectional view illustrating a motor operated valve according to a third embodiment.

The motor operated valve 301 is constituted by an assembly of a valve unit 302 and a motor unit 303. An elongated pin 392 (which functions as a "conductive member") is provided to extend through the case 76. The pin 392 has one end connected with the ground line 119 of the circuit board 118 (see FIG. 3B) and the other end connected with the first body 306.

The pin 392 is molded in the case 276 in molding. Connection of the ground line 119 of the circuit board 118 with the body 305 by one pin 392 in this manner achieves a large ground region, and effectively reduces the electromagnetic interference of the motor operated valve 301.

The description of the present invention given above is based upon certain embodiments. The embodiments are intended to be illustrative only and it will be obvious to those skilled in the art that various modifications could be further developed within the technical idea underlying the present invention as defined in the claims.

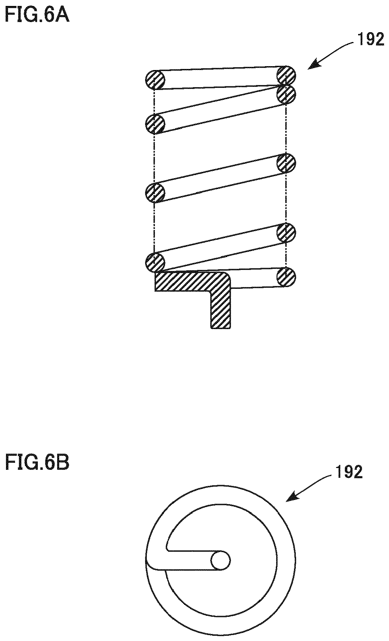

FIGS. 6A and 6B illustrate a conductive member according to a modification. FIG. 6A is a longitudinal sectional view, and FIG. 6B is a bottom view.

In the first and second embodiments described above, a coiled spring has been presented as an example of the conductive member. Although not mentioned in the embodiments, an end contact type spring 192 as illustrated in FIGS. 6A and 6B may be employed as the spring. An end of the winding of the spring 192 protrudes in the axial direction, and comes in contact with the surface of the laminated core 70 in such a manner as to break the insulating coating on the laminated core 70 and provides electrical conduction between the spring 192 and the laminated core 70. The end of the spring 192 functions as an "end contact portion" that can be brought into contact with the surface of the laminated core 70 by a pressing force caused by the elastic deformation of the spring 192. This eliminates the need of polishing of the laminated core 70. Alternatively, in modifications, other conductive members such as a pin, a rivet, a leaf spring and the like may be employed. A leaf spring having an end contact portion, a pin that flexurally deforms and comes in contact with the stator (core) at an end thereof, or the like may be employed. While a metal material is preferable for the conductive member, a resin material containing a conductive filler to have conductivity may be used. Conductive powder-impregnated rubber or the like may be employed. Note that use of an elastic member such as a spring as in the embodiments described above is advantageous in that the expansion and contraction of the spring absorb dimension error in the connecting direction, which increases the dimensional freedom (design flexibility) of the conductive member.

While an example in which the coiled spring 92 is placed in one of the three insertion holes 90 as illustrated in FIG. 3A has been presented in the embodiments, coiled springs 92 may also be placed in the remaining insertion holes 90 to provide an electromagnetic interference preventing function (an electrically connecting function; a grounding function). In other words, one or more conductive members may be inserted in one or more of a plurality of insertion holes corresponding to insertion traces of mold components, and each may be electrically connected with the ground line of the circuit board.

While the body is made of metal in the embodiments, the body may be made of resin or other non-conductive members as long as it is only necessary to electrically connect the ground line of the circuit board with the stator core.

Examples of a structure in which the conductive member is arranged between the ground line forming area of the circuit board and the end face of the core that face each other in the axial direction have been presented in the first and second embodiment. In other words, examples of a structure in which one end face of the conductive member is in contact with the end face of the core and the other end face thereof is in contact with the ground line forming area of the circuit board, so that the conductive member connects the circuit board with the core with the shortest distance, have been presented. In an example that is not according to the invention, a structure in which a side face of the conductive member is in contact with a side face of the core may be used, for example. This may increase the area of the contact between the conductive member and the cores. In terms of space saving, however, the conductive member is preferably structured as in the first and second embodiments, so that the length of the conductive member is shortest. The same applies to the conductive member arranged between the core and the body.

In an example that is not according to the invention, a ground line may be arranged on a side face of the circuit board or on the inner face of a hole in the circuit board, and a side face of the conductive member may be brought in contact with the ground line. The same applies to the conductive member arranged between the core and the body.

An example in which the pin 392 is molded in the case 76 has been presented in the third embodiment. In a modification, an insertion hole (insertion trace) extending through the case 76 may be formed in molding, and the pin 392 may be inserted in the insertion hole afterward.

In the embodiments, the laminated core (laminated magnetic core) has been presented as an example of the stator core. In a modification, a powder core or other cores may be employed. A powder core is also called a "powder magnetic core", and obtained by reducing a soft magnetic material to powder, kneading powder coated with non-conductive resin or the like and resin binder, and compression molding and heating the kneaded material. A laminated core allows magnetic flux to pass through easily in the in-plane direction of each core but hardly allows in the laminating direction. In this regard, a powder core has isotropic magnetic properties unlike the laminated core, and allows design of a stator including a three-dimensional magnetic circuit. Furthermore, a powder core can be made into any shape by compaction molding, which provides high design flexibility and enables an insertion hole to be formed at the same time during the compaction molding.

While an example of the structure in which the drive circuit, the control circuit, the communication circuit, and the power supply circuit are mounted on the lower face of the circuit board has been presented in the embodiments, the circuits that are mounted may be changed as appropriate. For example, a drive circuit and a power supply circuit may be mounted thereon, and a control circuit may be provided outside the motor operated valve. Alternatively, the circuits may be mounted on the upper face of the circuit board. In this case, the ground line may be extended to the lower face.

While the first embodiment is based on the structure in which the stator core and the circuit board are connected via the conductive member, according to an example that is not according to the invention, the connection with the core may be eliminated when the volume of the conductive member is sufficiently large. In other words, the conductive member itself may be used to reduce the electromagnetic interference.

While a PM stepping motor is employed as the motor unit in the embodiments, a hybrid stepping motor may alternatively be employed. In addition, while the motor unit is a three-phase motor in the embodiments, the motor unit may be a motor other than a three-phase motor, such as a two-phase, four-phase, or five-phase motor. The number of electromagnetic coils in the stator is not limited to three or six, but may be appropriately set depending on the number of phases of the motor. In such a case as well, the stator is constituted by a core, and a conductive member such as a coiled spring may be arranged between a circuit board and the core.

In the embodiments, an example in which the motor operated valve is a two-way valve having one outlet port and one inlet port has been presented. In a modification, the motor operated valve may be a three-way valve having two outlet ports and one inlet port or a four-way valve having two outlet ports and two inlet ports.

While the motor operated valve of the embodiments is suitably applicable to a refrigeration cycle using an alternative for chlorofluorocarbon (HFC-134a) or the like as the refrigerant, the motor operated valve can also be applied to a refrigeration cycle using a refrigerant with high working pressure, such as carbon dioxide. In this case, an external heat exchanger such as a gas cooler is provided instead of the condenser in the refrigeration cycle.

While the motor operated valve is an expansion valve in the embodiments, the motor operated valve may be an on-off valve or a flow control valve without an expanding function.

While an example in which the motor operated valve is applied to a refrigeration cycle in an automotive air conditioner has been presented in the embodiments, the motor operated valve can also be applied to an air conditioner including a motor operated expansion valve other than those for vehicles. Furthermore, the motor operated valve may be a motor operated valve for controlling a flow of fluid other than refrigerant.

## Claims

1. A motor operated valve (1, 201, 301) comprising:
an assembly of a body (5, 205, 305) including a valve section therein, and a motor unit (3, 203, 303) including a stator (64) coated with molding resin, wherein
the motor unit (3, 203, 303) includes:
a case (76, 276) integrated with the stator (64) by the molding resin, wherein a number of terminals (130, 132, 134, 136) are molded in the case (76, 276), wherein one of the terminals (130, 132, 134, 136) is a ground terminal and
a circuit board (118) provided in the case (76, 276),
the case (76, 276) has an insertion hole (90), the insertion hole (90) being an insertion trace of a mold component in the molding resin, and
a conductive member (92, 192) is inserted in the insertion hole (90) and
electrically connected with a ground line (119) of the circuit board (118),
the ground terminal (136) is electrically connected to the conductive member (92, 192) through the ground line (119) formed on the circuit board (118),
wherein the conductive member (92, 192) has one end connected with the ground line (119) and the other end connected with a core (70) of the stator (64),
and wherein a face of the circuit board (118) on which the ground line (119) is formed and one end face of the core (70) face each other in an axial direction of the core (70), and the conductive member (92, 192) is arranged therebetween.

2. The motor operated valve (1, 201) according to claim 1, wherein the conductive member (92, 192) is an elastic member.

3. The motor operated valve (1, 201) according to any one of claims 1 to 2, wherein the conductive member (192) has an end contact portion to be brought into contact with a surface of a component to be electrically connected by a pressing force caused by elastic deformation of the conductive member (192).

4. The motor operated valve (201) according to any one of claims 1 to 3, wherein
the body (205) is made of metal,
the case (276) has a second insertion hole (290), the second insertion hole (290) being an insertion trace of a second mold component, and
a second conductive member (292) is inserted in the second insertion hole (290) and connects a core (70) of the stator (64) with the body (205).

5. The motor operated valve (201) according to claim 4, wherein the second conductive member (292) is an elastic member.

6. The motor operated valve (201) according to claim 5, wherein the conductive member (92, 192) and the second conductive member (292) are coiled springs identical to each other.

7. The motor operated valve (301) according to any one of claims 1 to 6, wherein a further conductive member (392) extends through the case (76), and has one end connected with the ground line (119) and the other end connected with the body (305).

## Patentansprüche

1. Ein motorbetriebenes Ventil (1, 201, 301), umfassend:
eine Anordnung aus einem Körper (5, 205, 305) mit einem Ventilabschnitt darin und einer Motoreinheit (3, 203, 303) mit einem mit Gießharz beschichteten Stator (64), wobei
die Motoreinheit (3, 203, 303) umfasst:
ein Gehäuse (76, 276), das durch das Gießharz mit dem Stator (64) integriert ist, wobei eine Anzahl von Anschlüssen (130, 132, 134, 136) in das Gehäuse (76, 276) eingegossen ist, wobei einer der Anschlüsse (130, 132, 134, 136) ein Masseanschluss ist; und
eine Leiterplatte (118), die in dem Gehäuse (76, 276) vorgesehen ist,
das Gehäuse (76, 276) ein Einführungsloch (90) aufweist, wobei das Einführungsloch (90) eine Einführungsspur einer Formkomponente in dem Gießharz ist, und
ein leitfähiges Element (92, 192) in das Einführungsloch (90) eingesetzt und elektrisch mit einer Masseleitung (119) der Leiterplatte (118) verbunden ist, wobei der Masseanschluss (136) elektrisch mit dem leitfähigen Element (92, 192) über die auf der Leiterplatte (118) ausgebildete Masseleitung (119) verbunden ist,
wobei ein Ende des leitfähigen Elements (92, 192) mit der Masseleitung (119) und das andere Ende mit einem Kern (70) des Stators (64) verbunden ist,
und wobei eine Fläche der Leiterplatte (118), auf der die Masseleitung (119) ausgebildet ist, und eine Endfläche des Kerns (70) einander in einer axialen Richtung des Kerns (70) gegenüberliegen und das leitfähige Element (92, 192) dazwischen angeordnet ist.

2. Motorbetriebenes Ventil (1, 201) nach Anspruch 1, wobei das leitfähige Element (92, 192) ein elastisches Element ist.

3. Motorbetätigtes Ventil (1, 201) nach einem der Ansprüche 1 bis 2, wobei das leitfähige Element (192) einen Endkontaktabschnitt aufweist, der mit einer Oberfläche eines elektrisch zu verbindenden Bauteils durch eine durch elastische Verformung des leitfähigen Elements (192) verursachte Druckkraft in Kontakt gebracht wird.

4. Motorbetriebenes Ventil (201) nach einem der Ansprüche 1 bis 3, wobei
der Körper (205) aus Metall hergestellt ist,
das Gehäuse (276) ein zweites Einführungsloch (290) aufweist, wobei das zweite Einführungsloch (290) eine Einführungsspur eines zweiten Formteils ist, und
ein zweites leitfähiges Element (292) in das zweite Einführungsloch (290) eingesetzt ist und einen Kern (70) des Stators (64) mit dem Körper (205) verbindet.

5. Motorbetriebenes Ventil (201) nach Anspruch 4, wobei das zweite leitfähige Element (292) ein elastisches Element ist.

6. Motorbetriebenes Ventil (201) nach Anspruch 5, wobei das leitfähige Element (92, 192) und das zweite leitfähige Element (292) identische Spiralfedern sind.

7. Motorbetriebenes Ventil (301) nach einem der Ansprüche 1 bis 6, wobei sich ein weiteres leitfähiges Element (392) durch das Gehäuse (76) erstreckt und ein Ende mit der Masseleitung (119) und das andere Ende mit dem Körper (305) verbunden ist.

## Revendications

1. Vanne motorisée (1, 201, 301) comprenant:
un ensemble composé d'un corps (5, 205, 305) comprenant une section de vanne, et d'une unité de moteur (3, 203, 303) comprenant un stator (64) recouvert de résine de moulage, dans lequel
l'unité moteur (3, 203, 303) comprend:
un boîtier (76, 276) intégré au stator (64) par la résine de moulage, dans lequel un certain nombre de bornes (130, 132, 134, 136) sont moulées dans le boîtier (76, 276), l'une des bornes (130, 132, 134, 136) étant une borne de mise à la terre; et
une carte de circuit imprimé (118) placée dans le boîtier (76, 276),
le boîtier (76, 276) comporte un trou d'insertion (90), le trou d'insertion (90) étant une trace d'insertion d'un composant de moule dans la résine de moulage, et
un élément conducteur (92, 192) est inséré dans le trou d'insertion (90) et connecté électriquement à une ligne de terre (119) de la carte de circuit imprimé (118), le terminal de terre (136) est connecté électriquement à l'élément conducteur (92, 192) par la ligne de terre (119) formée sur la carte de circuit imprimé (118), dans lequel l'élément conducteur (92, 192) a une extrémité connectée à la ligne de terre (119) et l'autre extrémité connectée à un noyau (70) du stator (64), et dans lequel une face de la carte de circuit imprimé (118) sur laquelle la ligne de terre (119) est formée et une face d'extrémité du noyau (70) se font face dans une direction axiale du noyau (70), et l'élément conducteur (92, 192) est disposé entre les deux.

2. Valve motorisée (1, 201) selon la revendication 1, dans laquelle l'élément conducteur (92, 192) est un élément élastique.

3. Vanne motorisée (1, 201) selon l'une quelconque des revendications 1 à 2, dans laquelle l'élément conducteur (192) présente une partie de contact d'extrémité destinée à être mise en contact avec une surface d'un composant à connecter électriquement par une force de pression provoquée par la déformation élastique de l'élément conducteur (192).

4. Vanne motorisée (201) selon l'une quelconque des revendications 1 à 3, dans laquelle
le corps (205) est en métal,
le boîtier (276) comporte un deuxième trou d'insertion (290), le deuxième trou d'insertion (290) étant une trace d'insertion d'un deuxième composant de moule, et
un deuxième élément conducteur (292) est inséré dans le deuxième trou d'insertion (290) et relie un noyau (70) du stator (64) au corps (205).

5. Vanne motorisée (201) selon la revendication 4, dans laquelle le second élément conducteur (292) est un élément élastique.

6. Vanne motorisée (201) selon la revendication 5, dans laquelle l'élément conducteur (92, 192) et le second élément conducteur (292) sont des ressorts enroulés identiques l'un à l'autre.

7. Vanne motorisée (301) selon l'une des revendications 1 à 6, dans laquelle un autre élément conducteur (392) s'étend à travers le boîtier (76), et a une extrémité connectée à la ligne de terre (119) et l'autre extrémité connectée au corps (305).
